# EUROPÄISCHE PATENTSCHRIFT

(11) **EP 4 103 413 B1**
(45) Veröffentlichungstag und Bekanntmachung des Hinweises auf die Patenterteilung: **25.03.2026**
(21) Anmeldenummer: 21705138.2
(22) Anmeldetag: 10.02.2021
(51) Int. Cl.: B60D 1/36, B60D 1/62, B62D 15/02

(54) **VERFAHREN UND SYSTEM ZUM ERMITTELN EINER AUSRICHTUNG EINES ANHÄNGERS GEGENÜBER EINEM ZUGFAHRZEUG**
METHOD AND SYSTEM FOR ASCERTAINING AN ORIENTATION OF A TRAILER RELATIVE TO A TRACTOR VEHICLE
PROCÉDÉ ET SYSTÈME DE DÉTERMINATION D'UNE ORIENTATION D'UNE REMORQUE PAR RAPPORT À UN VÉHICULE TRACTEUR

(30) Priorität: 12.02.2020 DE 102020103597
(43) Veröffentlichungstag der Anmeldung: 21.12.2022
(73) Patentinhaber: SAF-HOLLAND GmbH, 63856 Bessenbach (DE)
(72) Erfinder: BRUNSCH, Bernd, 63303 Dreieich (DE); HARTMANN, Mark, 63869 Heigenbrücken (DE); KÖSTER, Mario Sebastian, 78351 Bodman-Ludwigshafen (DE)
(74) Vertreter: Müller Schupfner & Partner Patent- und Rechtsanwaltspartnerschaft mbB (Muc)
(86) Internationale Anmeldenummer: PCT/EP2021/053131
(87) Internationale Veröffentlichungsnummer: WO 2021/160637

(56) Entgegenhaltungen:
- WO-A1-2019/202317
- WO-A1-2019/231472
- DE-A1- 10 326 190
- DE-A1- 102017 011 177
- US-A1- 2015 345 938
- US-A1- 2018 057 052

## Beschreibung

Die vorliegende Erfindung betrifft ein Verfahren und ein System zum Ermitteln einer Ausrichtung eines Anhängers gegenüber einem Zugfahrzeug.

Aus dem Stand der Technik sind Koppelvorgänge zwischen Anhängern und Zugfahrzeugen hinlänglich bekannt, die manuell durchgeführt werden. Dabei fährt typischerweise ein Fahrer mit dem Zugfahrzeug solange rückwärts, bis beispielsweise ein Königszapfen in eine entsprechende zugfahrzeugseitige Kopplungsvorrichtung, insbesondere die Sattelkupplung, einrastet. Dabei orientiert sich der Fahrer typischerweise anhand seiner Außenspiegel oder wird von Kollegen neben dem Fahrzeug diesbezüglich unterstützt.

Für eine Automatisierung des Ankoppelvorgangs zwischen Anhänger und Zugfahrzeug ist es von entscheidender Bedeutung, den aktuellen Ausrichtungszustand des Anhängers gegenüber der Zugmaschine möglichst genau bestimmen zu können, um anhand der entsprechend ermittelten Informationen über die Ausrichtung den Ankoppelvorgang entsprechend steuern zu können. Aus der DE10 2018 205 981 A1 ist ein Verfahren bekannt, bei dem mittels einer Erfassungseinrichtung, beispielsweise mittels einer Kamera oder eines Ultraschallsensors, anhand des Abstands der Erfassungseinrichtung zu einem unterhalb des Anhängers angeordneten Objekt die aktuelle Ausrichtung des Anhängers gegenüber dem Zugfahrzeug ermittelt wird.

Die WO 2019/202317 zeigt eine Methode und ein System zum Messen einer Ausrichtung zwischen einem Fahrzeug und einem Anhänger, wobei der Anhänger vom Fahrzeug gezogen ist. Das System umfasst zumindest eine Kamera, welche eine feste Orientierung am Fahrzeug aufweist und dazu dient Bilder vom Anhänger zu machen. Des Weiteren umfasst das System eine Verarbeitungseinheit, welche der-art angeordnet ist, dass diese die Bilder der Kamera empfangen kann, wobei die Verarbeitungseinheit derart ausgelegt ist, dass diese Kamera Daten und verschiedensten Orientierungen relativ zum Anhänger auswerten kann und gemein-same Punkte in den Bilddaten erkennen kann.

Die WO 2019/231472 A1 betrifft ein Verfahren zum automatischen Manövrieren eines Fahrzeugs, wobei das Verfahren Gebrauch von Umgebungssensoren macht.

Die DE 013 26 190 A1 betrifft eine Vorrichtung zur Ermittlung einer räumlichen Aus-richtung eines mit einem Zugfahrzeug verbundenen Aufliegers, die Vorrichtung die Nick- und/oder Wankbewegung des Aufliegers oder Anhängers bezogen auf die Fahrbahnoberfläche ermitteln kann.

Die DE 10 2017 911 177 A1 betrifft ein Verfahren zur Ermittlung eines Knickwinkels eines Fahrzeug-Gespanns, wobei an einem Zugfahrzeug eine Stereo-Kamera an-geordnet ist, wobei das System Tiefeninformationen zu zumindest zwei Objektpunkten aus den jeweils zugeordneten ersten Abbildungspunkten und zweiten Abbildungspunkten extrahiert. Das Dokument US 2015/0345938 A1 offenbart ein bekanntes Verfahren und ein System zur Ermittlung einer Ausrichtung eines Anhängers gegenüber einem Zugfahrzeug.

Ausgehend von diesem Hintergrund macht es sich die vorliegende Erfindung zur Aufgabe, ein Verfahren und ein System zum Ermitteln einer Ausrichtung eines Anhängers gegenüber einem Zugahrzeug bereitzustellen, das gegenüber den aus dem Stand der Technik bekannten Verfahren und Systemen verbessert ist, insbesondere in Hinblick auf seine Einsatzfähigkeit bzw. Komplexität.

Die vorliegende Erfindung löst diese Aufgabe mittels eines Verfahrens gemäß Anspruch 1 und durch ein System zum Ermitteln einer Ausrichtung eines Anhängers gegenüber einem Zugfahrzeug gemäß Anspruch 14. Weitere Vorteile und Merkmale sind den abhängigen Ansprüchen und der Beschreibung zu entnehmen.

Gemäß einem ersten Aspekt der vorliegenden Erfindung ist ein Verfahren zum Ermitteln einer Ausrichtung eines Anhängers gegenüber einem Zugfahrzeug, insbesondere einer Ausrichtung eines Sattelanhängers gegenüber einer Sattelzugmaschine, wobei das Zugfahrzeug mindestens eine Erfassungseinrichtung aufweist, die einen ersten Objektbereich am Anhänger und einen zweiten Objektbereich am Anhänger erfasst, vorgesehen, umfassend:
(a) Aufnahme des ersten Objektbereichs und des zweiten Objektbereichs mittels der mindestens einen Erfassungseinrichtung;
(b) Bereitstellen der durch die mindestens eine Erfassungseinrichtung erfassten Aufnahme einer Auswerteinrichtung;
(c) Zuordnen einer ersten Information zum ersten Objektbereich und eine zweite Information zum zweiten Objektbereich mittels der Auswerteeinrichtung und
(d) Bestimmen der Ausrichtung des Anhängers gegenüber dem Zugfahrzeug basierend auf der ersten Information und der zweiten Information mittels der Auswerteeinrichtung.

Gegenüber den aus dem Stand der Technik bekannten Verfahren zum Ermitteln einer Ausrichtung eines Anhängers gegenüber einem Zugfahrzeug ist es erfindungsgemäß vorgesehen, dass sowohl ein erster Objektbereich als auch ein zweiter Objektbereich am Anhänger erfasst werden, und diesem ersten und zweiten Objektbereich jeweils mindestens eine erste Information und/oder zweite Information zugeordnet werden, die wiederrum dazu genutzt werden, die aktuelle Ausrichtung des Anhängers gegenüber dem Zugahrzeug zu ermitteln. Insbesondere wird dabei ein Vergleich zwischen der ersten Information und der zweiten Information am Anhänger genutzt. Damit unterscheidet man sich von solchen Verfahren, bei denen der Abstand zwischen einem Objekt und der mindestens einen Erfassungseinrichtung bestimmt wird. Anstatt dessen werden Informationen über die Ausrichtung anhand zweier Informationen, nämlich der ersten und der zweiten Information, in der Aufnahme des Anhängers, insbesondere in einer entlang einer Projektionsrichtung aufgenommenen Aufnahme, selbst ermittelt. Dadurch kann beispielsweise auf aufwendige Triangulation verzichtet werden, die anderenfalls erforderlich wären. Insbesondere handelt sich bei der Aufnahme um eine zweidimensionale Projektionsdarstellung des ersten Objektbereichs und des zweiten Objektbereichs entlang der Projektionsrichtung der mindestens einen Erfassungseinrichtung. Außerdem ist es möglich, mit nur einer einzigen Erfassungseinrichtung, beispielsweise einer einzelnen Kamera, ausreichend Informationen zu sammeln, um die Ausrichtung des Anhängers zu bestimmen. Entsprechend wäre es nicht notwendig, eine Vielzahl an Erfassungseinrichtungen und/oder Sensoren am rückseitigen Ende bzw. am hinteren Ende des Zugfahrzeugs anzuordnen, wie es aus dem Stand der Technik beispielsweise üblich ist. Dabei ist es insbesondere vorgesehen, dass der erste Objektbereich und der zweite Objektbereich am Anhänger, bezogen auf die Längsrichtung des Anhängers, in verschiedenen Ebenen angeordnet sind. Dadurch kann beispielsweise durch eine relative Position oder Relativposition des ersten Objektbereichs gegenüber dem zweiten Objektbereich ein Bestimmen der Ausrichtung des Anhängers erfolgen. Somit stellt beispielsweise die Position des ersten Objektbereichs gegenüber der Position des zweiten Objektbereichs, insbesondere in einer projektierten Aufnahme vom ersten Objektbereich und dem zweiten Objektbereich, eine erste Information bzw. eine zweite Information dar, die zur Bestimmung der Ausrichtung des Anhängers gegenüber dem Zugfahrzeug herangezogen werden kann.

Vorzugsweise ist es vorgesehen, dass das System dazu ausgelegt ist, dass die Daten einer einzigen Erfassungseinrichtung ausreichen, um erste Informationen vom ersten Objektbereich und zweite Informationen vom zweiten Objektbereich zu erhalten und die Ausrichtung zu bestimmen. Dabei ist neben der einzigen Erfassungseinrichtung mindestens eine Zusatzerfassungseinrichtung vorstellbar, die eine Redundanz zur einzigen Erfassungseinrichtung schafft. Dabei dient die Zusatzerfassungseinrichtung dazu, im Falle eines Ausfalls oder einer Sichtbehinderung der einzigen Erfassungseinrichtung, die Aufgabe der Erfassungseinrichtung zu übernehmen und die Daten der Auswerteeinheit bereitzustellen. Insbesondere ist es vorgesehen, dass die einzige Erfassungseinrichtung und die Zusatzeinrichtung keine Daten bereitstellen, die gemeinschaftlich bzw. gemeinsam von der Auswerteeinheit ausgewertet werden.

Insbesondere erfolgt das Bestimmen der Ausrichtung des Anhängers auf Grundlage der Daten, die von einer einzigen Erfassungseinrichtung aufgenommen wurden. Dabei kann beispielsweise zwischen den aufgenommenen Daten verschiedener Erfassungseinrichtung gewechselt werden, wenn beispielsweise festgestellt wird, dass die Qualität der Daten der einen Erfassungseinrichtung nicht ausreichend sind. Denkbar ist auch, dass die Bestimmung der Ausrichtung mit einer weiteren Erfassungseinrichtung geprüft wird, dessen Daten unabhängig von den Daten der Erfassungseinrichtung mittels der Auswerteeinrichtung ausgewertet werden. Bevorzugt werden somit nicht die Daten der Erfassungseinrichtung und der weiteren Erfassungseinrichtung gemeinschaftlich ausgewertet, indem beispielswiese ihre unterschiedliche Positionierungen dazu herangezogen werden, Tiefeninformationen oder ähnliches zu erhalten.

Ferner ist es vorstellbar, dass zeitgleich nur Daten einer einzigen Erfassungseinrichtung erfasst werden. Dabei kann die Erfassung von Daten zwischen der Erfassungseinrichtung und einer Zusatzerfassungseinrichtung zeitlich wechseln. Beispielsweise werden mehrere Erfassungseinrichtung an einem Zugfahrzeug angebracht und nacheinander erfolgt ein Erfassen von Daten und ein isoliertes Bestimmen der Ausrichtung des Anhängers. Dadurch lassen sich die einzelnen Ergebnisse direkt miteinander vergleichen und es lässt sich verhindern, dass eine Erfassungseinrichtung beispielsweise auf Grund einer Sichtbehinderung, keine zuverlässige Information über die Ausrichtung des Anhängers bereitstellen kann. Bevorzugt ist es vorgesehen, dass die mindestens eine Erfassungseinrichtung ein optischer Sensor, insbesondere eine Kamera, ist, die vorzugsweise in Querrichtung mittig am Zugfahrzeug angeordnet ist. Die Nutzung einer Kamera erweist sich insbesondere als vorteilhaft, da mittels der Kamera zusätzlich ein Betriebszustand bzw. ein Kopplungszustand der Komponente im ersten Objektbereich und des zweiten Objektbereichs miterfasst werden kann. Beispielsweise kann mittels der Kamera und unter Verwendung der Auswerteeinrichtung festgestellt werden, ob die Stützwinden ausgefahren sind und/oder in einem kopplungsfähigen Zustand sind. Außerdem lässt sich feststellen, ob der Weg bzw. der Zwischenbereich zwischen Anhänger und Zugfahrzeug frei von Gegenständen ist, die anderenfalls einem Kupplungs- oder Kopplungsvorgang im Weg stehen würden. Gleichzeitig können beispielsweise aber auch Bodenwellen erkannt werden, die insbesondere der ausgefahrenen Stützwinde als Hindernis beim Kupplungsvorgang im Weg stehen könnte. Entsprechend lässt sich eine als Kamera ausgeführte Erfassungseinrichtung in mehrfacher Hinsicht für den geplanten Kopplungsvorgang nutzen. Unter "mittig" ist insbesondere eine Anordnung innerhalb eine Toleranz von +/- 15 cm bezogen auf die exakt gemessene Mitte des Zugfahrzeugs in Querrichtung zu verstehen. Die bevorzugt mittige Anordnung der Erfassungseinrichtung erweist sich insbesondere deswegen als vorteilhaft, da dadurch bereits ein Verschieben des ersten und/oder zweiten Objektbereichs gegenüber der Mitte des von der Erfassungseinrichtung aufgenommenen Bildes dazu herangezogen werden kann, ein Abstand und/oder eine Ausrichtung des Anhängers gegenüber dem Zugfahrzeug zu quantifizieren. Weiterhin ist es vorstellbar, dass der erste Objektbereich und/oder zweite Objektbereich unterhalb des Anhängers angeordnet ist. Alternativ ist es vorstellbar, dass der erste und/oder zweite Objektbereich auf einer Oberseite des Anhängers angeordnet ist. Beispielsweise kann es sich um entsprechende Markierungen und/oder Ecken an der Oberseite des Anhängers handeln. Hierzu ist es beispielsweise vorstellbar, dass die Erfassungseinrichtung an einer Oberseite eines Führerhauses am Zugfahrzeug montiert ist, insbesondere so, dass die Kamera den Rückraum des Zugfahrzeugs aufnimmt. Alternativ oder ergänzend ist es beispielsweise vorstellbar, dass zur Ausbildung eines ersten oder zweiten Objektbereichs gezielt Markierungen am Anhänger platziert werden. Beispielsweise handelt es sich hier bei solchen Markierungen um flächige Schilder, die in verschiedenen Ebenen in Längsrichtung gesehen am Anhänger montiert werden und anhand deren Relativposition die entsprechende erste bzw. zweite Informationen abgeleitet werden kann, die anschließend zur Bestimmung der Ausrichtung des Anhängers gegenüber der Zugfahrzeuge benutzt wird. Eine derartige Nutzung von Schildern kann beispielsweise den Auswertemechanismus, beispielsweise die Gegenstand bzw. Objekterkennung, vereinfachen, insbesondere wenn beispielsweise die Schilder eine entsprechende Farbmarkierung haben, die besonders einfach zu identifizieren ist. Dadurch können gegebenenfalls Fehler bei der Gegen- oder Objekterkennung minimiert werden.

Vorzugsweise ist die Auswerteinrichtung zur Gegenstanderkennung im ersten Objektbereich und/oder zweiten Objektbereich ausgelegt. Dabei ist es insbesondere auch vorgesehen, dass die der Auswerteeinrichtung bereitgestellte Aufnahme, die beispielsweise bzw. insbesondere eine Projektion des ersten Objektbereichs und des zweiten Objektbereichs in eine parallel zur Mittelachse des Zugfahrzeugs verlaufende Projektionsrichtung darstellt, dazu ausgelegt ist, eine Objekt- und/oder Gegenstandserkennung durchzuführen. Erfindungsgemäß ermöglicht eine derartige Gegenstands- oder Objekterkennung beispielsweise anhand der aufgenommenen Konturen eine Zuordnung des ersten und/oder zweiten Objektbereichs einer bestimmten anhängerseitigen Komponente. Bezüglich der Gegenstanderkennung bzw. Objekterkennung ist explizit auf den Offenbarungsgehalt der EP 1 497 160 B2, EP 2 535 841 B1, DE 10 2006 020 387 B4, EP 1306603 B2 und EP 104 0366 B1 zu verweisen. Beispielsweise handelt es sich bei der innerhalb des ersten Objektbereichs und/oder zweiten Objektbereichs gelegenen Komponente um einen Königszapfen und/oder eine Grundplatte und/oder eine Gegenplatte und/oder erfindungsgemäß eine Stützwinde und/oder erfindungsgemäß einen Stützwindenfuß und/oder erfindungsgemäß ein Verstärkungskreuz und/oder eine Verbindungswelle und/oder einen Radkasten und/oder einen Reifen. Fernen können als erste und/oder zweite Informationen neben der relativen Positionen des ersten Objektbereichs gegenüber dem zweiten Objektbereich in der vorzugsweise zweidimensionalen Projektaufnahme der Erfassungseinrichtung auch eine Größe, d. h. eine Dimensionierung, und/oder eine Ausrichtung der Komponente im ersten und/oder zweiten Objektbereich herangezogen werden, um Erkenntnisse über die aktuelle Ausrichtung des Anhängers gegenüber dem Zugfahrzeug zu ermitteln. Vorzugsweise ist der erste Objektbereich und/oder der zweite Objektbereich mindestens 10 Zentimeter groß damit die Erfassungseinrichtung den ersten und/oder zweiten Objektbereich auch bei großen Abständen zwischen dem Anhängerund dem Zugfahrzeug ermitteln kann.

Vorzugsweise ist die erfasste Aufnahme eine Projektionsdarstellung des ersten Objektbereichs und des zweiten Objektbereichs entlang einer parallel zu einer Mittelachse des Zugfahrzeugs verlaufenden Projektionsrichtung.

Besonders bevorzugt wird die erste Information mit der zweiten Information verglichen zur Bestimmung der Ausrichtung des Anhängers gegenüber dem Zugfahrzeug. Beispielsweise werden die jeweiligen erfassten Positionen des ersten Objektbereichs und des zweiten Objektbereichs miteinander verglichen und anhand der Relativposition des ersten Objektbereichs und des zweiten Objektbereichs die Ausrichtung bestimmt. Beispielsweise ist es aber auch vorstellbar, dass die jeweilige Ausrichtung, das heißt die jeweilige Erstreckungsrichtung des ersten Objektbereichs bzw. einer Komponente im ersten Objektbereich oder des zweiten Objektbereichs bzw. einer weiteren Komponente im zweiten Objektbereich als erste und/oder zweite Information herangezogen wird und die relative Ausrichtung der jeweiligen Längen bzw. Erstreckungslängen des ersten Objektbereichs und des zweiten Objektbereichs bzw. der ersten Komponente und einer weiteren Komponente in den Aufnahme miteinander verglichen werden, um die aktuelle Ausrichtung des Anhängers gegenüber dem Zugfahrzeug zu ermitteln.

Zweckmäßigerweise wird mittels mindestens einer weiteren Erfassungseinrichtung und/oder der mindestens einen Erfassungseinrichtung zusätzlich ein Abstand der mindestens einen weiteren Erfassungseinrichtung bzw. der mindestens einen Erfassungseinrichtung auf der einen Seite und dem ersten Objektbereich und/oder dem zweiten Objektbereich auf der anderen Seite ermittelt wird bzw. erfasst. Dadurch ist es in vorteilhafterweise möglich eine gewisse Redundanz zu schaffen, die Sicherheit gibt, insbesondere in Fällen bei denen die Sicht für die Erfassungseinrichtung und/oder weitere Erfassungseinrichtung blockiert ist und/oder durch einen Defekt beeinträchtigt ist. Mittels der weiteren Erfassungseinrichtung, die beispielsweise ein LIDAR-Sensor, RADAR-Sensor, Ultraschallsensor und/oder eine andere Art eines berührungslosen Entfernungssensors umfasst, lässt sich beispielsweise mittels einer Triangulation die aktuelle Ausrichtung des Anhängers zum Zugfahrzeug ermitteln.

Vorzugsweise ist die mindestens eine weitere Erfassungseinrichtung beabstandet zu der mindestens einen Erfassungseinrichtung angeordnet. Dadurch ist es in vorteilhafter Weise möglich, einen weiteren Blickwinkel bzw. eine weitere Perspektive bereitzustellen, aus der der erste Objektbereich und/oder der zweite Objektbereich zwecks der Bestimmung des Ausrichtung des Anhängers gegenüber dem Zugfahrzeug vermessen wird. Dies erweist sich insbesondere dann als vorteilhaft, wenn die mindestens eine Erfassungseinrichtung und/oder die mindestens eine weitere Erfassungseinrichtung in Hinblick auf Ihre Sicht eingeschränkt ist. Beispielsweise ist es auch vorstellbar, dass die mindestens eine weitere Erfassungseinrichtung und die mindestens eine Erfassungseinrichtung jeweils eine Kamera sind. Beispielsweise könnte bei Regen die mindestens eine Erfassungseinrichtung hinsichtlich ihres Aufnahmevermögens eingeschränkt sein bzw. die Aufnahme derart beeinträchtigt sein, dass eine Gegenstands- oder Objekterkennung innerhalb der Aufnahme nicht mehr möglich ist, sodass es von Vorteil ist, auf eine Alternative zur Identifizierung bzw. Objekterkennung zurückzugreifen. Hierzu erweist sich die mindestens eine weitere Erfassungseinrichtung, die insbesondere beabstandet ist zur mindestens einen Erfassungseinrichtung als vorteilhaft.

Vorzugsweise wird die bestimmte bzw. ermittelte Ausrichtung zum Steuern und/oder Führen des Zugfahrzeugs und/oder des Anhängers verwendet. Dadurch ist es in vorteilhafter Weise möglich, den Ankoppelmechanismus auf Basis der ermittelten Ausrichtungsinformation für das autonome bzw. automatisierte Ankoppeln des Anhängers an das Zugfahrzeug zu nutzen.

Vorzugsweise wird vom ersten Objektbereich zu einem ersten Zeitpunkt und einem weiteren ersten Zeitpunkt jeweils eine Aufnahme von der mindestens einen Erfassungseinrichtung gemacht, wobei dem ersten Objektbereich zum ersten Zeitpunkt die erste Information und zum zweiten Punkt eine weitere erste Information zugeordnet wird, wobei anhand eines Vergleichs der ersten Information und der weiteren ersten Information eine zeitliche Änderung der Ausrichtung des Anhängers zum Fahrzeug bestimmt wird. Beispielsweise handelt es sich hier bei der ersten Information und der weiteren ersten Information um die absoluten Größen, die der jeweiligen Komponente im ersten Objektbereich zugeordnet werden. Durch eine entsprechende Größenänderung zwischen dem ersten Zeitpunkt und dem zweiten Zeitpunkt lässt sich dadurch eine Abstandsänderung erfassen, die zwischen dem zweiten Zeitpunkt und ersten Zeitpunkt erfolgt ist. Dadurch lässt sich beispielsweise auch eine Geschwindigkeit des Anhängers bzw. der Relativbewegung des Anhängers gegenüber dem Zugfahrzeug ermitteln. Denkbar ist auch zukünftige Veränderungen vorherzusehen, z. B. einen Fahrweg einzuschätzen und vorherzusagen.

Insbesondere lassen sich Abstände und Distanzen auf der von der Erfassungseinrichtung detektierten Aufnahme dadurch ermitteln, dass beispielsweise jedes Pixel in der Aufnahme entweder dem ersten Objektbereich, dem zweiten Objektbereich und/oder einem weiteren Bereich zugeordnet wird. Der Abstand zwischen dem ersten Bereich und dem zweiten Bereich lässt sich dann anhand der Pixel erfassen, die wiederum zwischen dem ersten Objektbereich und dem zweiten Objektbereich angeordnet sind, das heißt dem weiteren Bereich zwischen dem Ersten Objektbereich und dem zweiten Objektbereich zugeordnet sind. Anhand der gemessenen bzw. der gezählten Pixel lässt sich somit der Abstand zwischen dem ersten Objektbereich und dem zweiten Objektbereich quantitativ erfassen. Dies trifft insbesondere zu, wenn die tatsächlichen Abmessungen der erkannten Komponente bekannt sind und zudem noch die Distanz zur Kamera ermittelt werden kann. In diesem Fall ist es vorteilhaft, wenn ein Erfassungswinkel der Kamera bekannt ist, um über Trigonometrie und Pixelzählen eine Auswertung vorzunehmen. Vorzugsweise ist es vorgesehen, dass die Erfassungseinrichtung derart ausgelegt ist, dass sowohl in der Ebene des ersten Objektbereichs als auch in der Ebene des zweiten Objektbereichs eine möglichst scharfe Aufnahme des ersten Objektbereichs und/oder des zweiten Objektbereichs bereitstellt wird. Hierzu ist es von Vorteil sicherzustellen, dass der erste Objektbereich und der zweite Objektbereich in Ebenen liegen, die nicht mehr als acht Meter, bevorzugt nicht mehr als fünf Meter und besonders bevorzugt nicht mehr als drei Meter voneinander entfernt sind. Dadurch kann sichergestellt werden, dass sowohl der erste Objektbereich als auch der zweite Objektbereich mit einer ausreichenden Schärfe aufgenommen werden kann, die insbesondere für die Objekterkennung und/oder Positionsbestimmung ausreichend genau Informationen bereitstellt, die die Ausrichtung des Anhängers gegenüber dem Zugfahrzeug so erlaubt, dass eine automatisierte Kopplung des Anhängers gegenüber dem Zugfahrzeug, d. h. eine automatisierte Kopplung, möglich ist.

Vorzugsweise wird das Verfahren in einem entkoppelten Zustand zwischen dem Zugfahrzeug und dem Anhänger durchgeführt. Insbesondere ist es vorgesehen, dass der Anhänger und das Zugfahrzeug beispielsweise auf einem Hofgelände 10 oder 15 Meter voneinander entfernt sind, um anschließend anhand der durch das Verfahren ermittelten Information über die jeweiligen Ausrichtungen ein automatisiertes Koppeln vorzunehmen.

Zweckmäßigerweise wird ein erster Satz an Information zum ersten Objektbereich und ein zweiter Satz an Information zum zweiten Objektbereich mittels der Auswerteeinrichtung zugeordnet, wobei die Ausrichtung des Anhängers gegenüber dem Zugfahrzeug basierend auf dem ersten Satz an Informationen und/oder dem zweiten Satz an Informationen bestimmt wird. Dabei kann es sich beispielsweise beim Satz an Informationen, d. h. an ersten Informationen und zweiten Informationen, um verschiedene Informationstypen handeln. Beispielsweise wird zur Bestimmung der Ausrichtung des Anhängers, sowohl die Größe und/oder Position und/oder der Abstand und/oder die Neigung des ersten und/oder zweiten Objektbereichs zum ersten Satz und/oder zweiten Satz an Informationen gezählt. Dadurch können wahlweise redundante und/oder zusätzliche Informationen ermittelt werden, die für ein erfolgreiches Ankuppeln beim automatisierten Ankoppeln bzw. autonomen Kuppeln erforderlich sind.

Vorzugsweise umfasst der erste Objektbereich und/oder der zweite Objektbereich eine Komponente des Anhängers. Dadurch ist man in vorteilhafterweise nicht darauf angewiesen, eine zusätzliche zu identifizierende Fläche am Anhänger anzubringen. Stattdessen werden bereits ohnehin am Anhänger befindliche Komponenten, insbesondere an der Bodenseite bzw. Unterseite des Anhängers, dazu genutzt, als Referenz und/oder als erster Objektbereich oder als zweiter Objektbereich zu dienen. Denkbar ist es auch, dass seitliche Komponenten des Anhängers, wie beispielsweise Ösen und/oder Schnallen, mit denen eine Plane am Anhänger montiert ist, als erster und/oder zweiter Objektbereich herangezogen werden.

Ein weiterer Gegenstand der vorliegenden Erfindung ist ein System zum Durchführen des erfindungsgemäßen Verfahrens, wobei das System eine mindestens eine Erfassungseinrichtung und mindestens eine Auswerteeinrichtung umfasst. Alle für das Verfahren beschriebenen Merkmale und Gegenstände lassen sich analog auf das System übertragen und andersrum.

Weitere Vorteile und Merkmale ergeben sich aus der nachfolgenden Beschreibung bevorzugter Ausführungsformen des erfindungsgemäßen Gegenstands mit Bezug auf die Figuren. Es zeigen:
- **Fig.1:**: eine Zugmaschine und ein Anhänger für ein Verfahren gemäß einer beispielhaften Ausführungsform der vorliegenden Erfindung in einer Bodenansicht und zwei Seitenansichten
- **Fig. 2**: die Zugmaschine und der Anhänger aus Figur 1 in einer weiteren Draufsicht
- **Fig. 3**: die Zugmaschine und der Anhänger aus den Figuren 1 und 2 in einer weiteren Seitenansicht und perspektivischen Darstellung,
- **Fig.4 a bis 4c**: der Anhänger aus den Figuren 1 bis 3 in einer Bodenansicht und der weiteren Seitensicht für verschieden Ausrichtungen
- **Fig. 5**: der Anhänger in der weiteren Seitenansicht aus Figur 4a
- **Fig. 6**: der Anhänger in der weiteren Seitenansicht aus Figur 4b
- **Fig. 7**: der Anhänger in der weiteren Seitenansicht aus Figur 4c
- **Fig. 8**: die Zugmaschine und der Anhänger aus Figur 1 in einer Bodenansicht

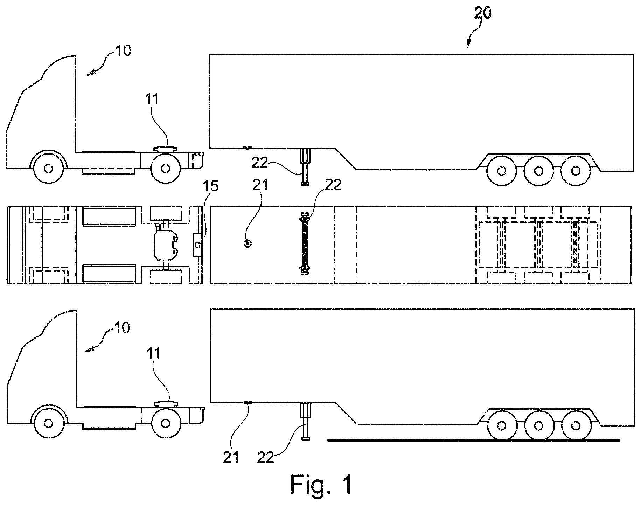

In **Figur 1** ist schematisch ein System aus einem Zugfahrzeug 10 und einem Anhänger 20, insbesondere einem Sattelanhänger, dargestellt. Ein solches System aus Sattelanhänger bzw. Anhänger 20 und Zugfahrzeug 10 wird vorzugsweise über ein Kopplungsmechanismus aneinander gekoppelt. Hierzu umfasst das Zugfahrzeug 10 beispielsweise eine Kopplungsplatte 11, in die ein Königszapfen des Anhängers 20 in gekoppelten Zustand eingreift. Hierzu wird typischerweise bzw. üblicherweise der Königszapfen in eine entsprechende schlitzartige Aussparung der Kopplungsplatte 11 eingefügt bzw. eingeführt und beispielsweise mit eines hakenförmigen Elements an der Kopplungsplatte 11 fixiert.

Für ein automatisiertes bzw. ein autonomes Koppeln des Anhängers 20 an das Zugfahrzeug 10 ist mindestens eine Erfassungseinrichtung 15 vorgesehen, die am Zugfahrzeug 10 angeordnet ist und dazu vorgesehen ist, die Ausrichtung, insbesondere die relative Ausrichtung des Anhängers 20 gegenüber dem Zugfahrzeug 10 festzulegen. Unter dem Begriff Ausrichtung ist insbesondere der Abstand des Anhängers 20 zum Zugfahrzeug 10 zu verstehen und/oder die relative Neigung der sich jeweils in Längsrichtung des Zugfahrzeugs 10 und des Anhängers 20 erstreckenden Mittelachsen Z1, Z2 zueinander. Vorzugsweise handelt es sich bei der Erfassungseinrichtung 15 um eine Kamera. Diese Erfassungseinrichtung 15 ist beispielsweise in Querrichtung QR des Zugfahrzeugs 10 gesehen mittig angeordnet. Vorzugsweise ist die Erfassungseinrichtung 15 in Fahrtrichtung des Zugfahrzeugs 10 gesehen hinter der Kupplungsplatte 11 angeordnet und beispielsweise am abschließenden bzw. hinteren Ende des Zugfahrzeugs 10 montiert. Dabei bedingt die mittige Ausrichtung bzw. Anordnung der Erfassungseinrichtung 15, dass die Erfassungseinrichtung 15 im Wesentlichen in Querrichtung QR gesehen auf Höhe der Mittelachse Z1 des Zugahrzeugs angeordnet ist. Vorzugsweise umfasst das System zum Ermitteln einer Ausrichtung eines Anhängers 20 und eines Zugfahrzeuges 10 nur eine einzige Kamera bzw. Erfassungseinrichtung 15.

Vorzugsweise ist die Erfassungseinrichtung 15 derart ausgestaltet, dass sie im Betrieb einen ersten Objektbereich 21 am Anhänger 20 und einen zweiten Objektbereich 22 am Anhänger 20 erfasst. Hierzu muss die Erfassungseinrichtung 15 entsprechend derart konfiguriert sein, dass sie einen entsprechenden Rückraum des Zugfahrzeugs 10 erfasst und/oder ein Linsensystem aufweist mit dem sowohl ein erster Objektbereich 21 und ein zweiter Objektbereich 22 erfasst werden können, wobei der erste Objektbereich 21 und der zweite Objektbereich 22 in Längsrichtung des Anhängers 20 zueinander versetzt sind. Vorzugsweise ist die mindestens eine Erfassungseinrichtung 15 derart ausgelegt, dass die mindestens eine Erfassungseinrichtung 15 sowohl in einer Ebene des ersten Objektbereichs 21 als auch in einer Ebene des zweiten Objektbereichs 22 fokussieren kann, wobei ein Abstand zwischen der Ebene des ersten Objektbereichs 21 und der Ebene des zweiten Objektbereichs 22 einen Abstand zwischen 1,5 und 8 Meter, besonders bevorzugt zwischen 0,5 und 5 Meter und besonders bevorzugt zwischen 0,8 und 7 Meter aufweist.

Insbesondere ist es vorgesehen, dass die mindestens eine Erfassungseinrichtung 15 im Betrieb eine Aufnahme des ersten Objektbereichs 21 und des zweiten Objektbereichs 22 mittels der mindestens einen Erfassungseinrichtung 15 aufnimmt. Die aufgenommene Aufnahme des ersten Objektbereichs 21 und des zweiten Objektbereichs 22 mittels der mindestens einen Erfassungseinrichtung 15 wird anschließend einer Auswerteeinrichtung bereitgestellt bzw. an diese weitergeleitet. Die Auswerteeinrichtung ordnet dem ersten Objektbereich 21 mindestens eine Information und dem zweiten Objektbereich 22 mindestens eine zweite Information zu. Bei der ersten Information und/oder zweiten Information kann es sich zum Beispiel um eine Klassifikation des ersten Objektbereichs 21 und/oder zweiten Objektbereichs 22 handeln. Beispielsweise identifiziert die Auswerteeinrichtung anhand der gemachten Aufnahme, dass es sich bei dem ersten Objektbereich 21 um einen Königszapfen handelt und bei dem zweiten Objektbereich 22 um eine Stützwinde bzw. um ein Teil einer Stützwinde. Die Auswerteeinrichtung ist vorzugsweise zur Objekt- bzw. Gegenstandserkennung ausgelegt. Hierzu werden beispielsweise einzelne Pixel des von der Kamera aufgenommenen Bildes jeweils einem ersten Objektbereich 21, insbesondere einer Komponente des Anhängers 20, und/oder einem zweiten Objektbereich 22, insbesondere einer weiteren Komponente des Anhängers, zugeordnet. Weiterhin umfasst die erste Information und/oder die zweite Information beispielsweise eine Angabe über die Position, insbesondere in der Aufnahme der mindestens einen Erfassungseinrichtung 15, über eine Größe und/oder über eine Ausrichtung des ersten Objektbereich 21 und/oder des zweiten Objektbereichs 22. Anhand dieser ersten und/oder zweiten Information ist es dann in vorteilhafter Weise möglich, dass die Auswerteeinrichtung die Ausrichtung des Anhängers 20 gegenüber dem Zugfahrzeug 10 bestimmt. Beispielsweise lässt sich anhand der relativen Position und/oder Ausrichtung des ersten Objektbereichs 21 gegenüber dem zweiten Objektbereich 22 eine Schrägstellung des Anhängers 20 quantifizieren. Weiterhin ist es vorstellbar, dass beispielsweise anhand der Größe des ersten Objektbereichs 21 und des zweiten Objektbereichs 22, insbesondere des Vergleichs der Größe des ersten Objektbereichs 21 und des zweiten Objektbereichs 22, ein Abstand des Anhängers 20 gegenüber dem Zugfahrzeug 10 ermittelt wird. Insbesondere erweist es sich als vorteilhaft lediglich eine einzelne Kamera zu verwenden und auf die erste und zweite Information des jeweils ersten Objektbereichs 21 und des zweiten Objektbereichs 22 zurückzugreifen, da dadurch auf aufwändige Triangulation oder Ähnliches verzichtet werden kann. Vorzugsweise ergreift die Auswerteeinrichtung insbesondere zur Gegenstands- oder Objekterkennung auf ein Netzwerk zurück, beispielsweise auf ein neuronales Netzwerk.

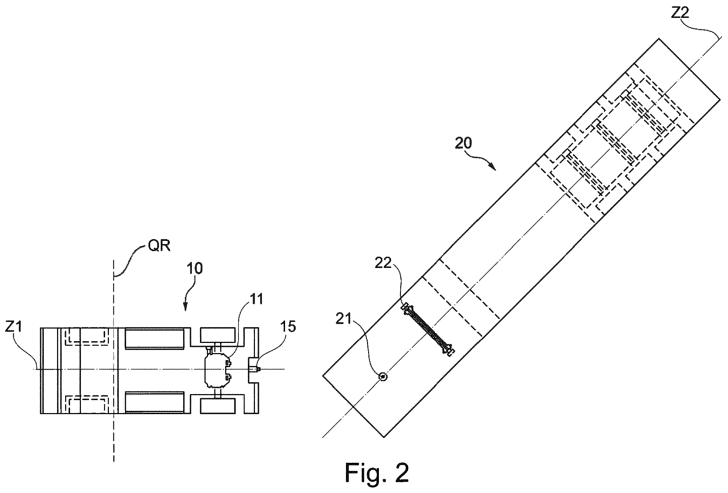

Beispielsweise zeigt die **Figur 2** eine schräge Ausrichtung, das heißt eine insbesondere schräge Ausrichtung einer Mittelachse Z2 des Anhängers 20 aus der Perspektive der Erfassungseinrichtung 15, die insbesondere einen ersten Objektbereich 21 in Form des Königszapfens und ein zweite Objektbereich 22 in Form der Stützwinde erfasst. Es ist hierbei möglich, anhand der relativen Position des Königszapfens gegenüber der Stützwinden zu erfassen, in wie weit der Anhänger 20 gegenüber der Ausrichtung des Zugfahrzeugs 10 schräggestellt ist. Insbesondere dient hierbei der erste Objektbereich 21 als Referenz für den zweiten Objektbereich 22, um anhand dieser Ausrichtung des zweiten Objektbereichs 22 gegenüber des ersten Objektbereichs 21 in der Aufnahme der Erfassungseinrichtung 15 Aufschluss zu erlangen über die relative Ausrichtung des Anhängers 20 gegenüber dem Zugfahrzeug 10. Alternativ zur Bestimmung der Relativposition des zweiten Objektbereichs 22 kann als erster Objektbereich 21 auch eine Verbindungswelle und/oder eine Gegenplatte oder Grundplatte des Anhängers 20 herangezogen werden.

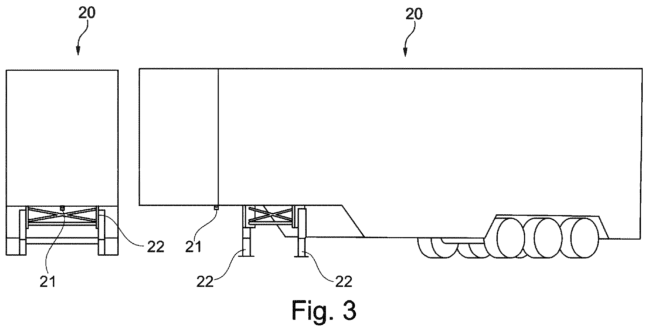

In **Figur 3** ist eine Seitenansicht (links) auf den Anhänger 20 zu erkennen, bei der die Mittelachse Z2 des Anhängers 20 fluchtend zur Mittelachse Z1 des Zugfahrzeugs 10 angeordnet ist. In dieser relativen Ausrichtung von Zugfahrzeug 10 und Anhänger 20 liegt der erste Objektbereich 21, insbesondere in Form eines Königszapfens, mittig zwischen Stützwinden, die als zweiter Objektbereich 22 herangezogen werden. Beispielsweise kann auch eine die zwei Stützwinden verbindende Kreuzverbindung als zweiter Objektbereich 22 herangezogen werden. In der rechten Seitenansicht in Figur 3 ist eine Seitenansicht aus der Perspektive des Zugfahrzeugs 10 dargestellt, bei der die Mittelachse Z2 des Anhängers 20 gegenüber der Mittelachse Z1 des Zugfahrzeugs 10 schräg ausgerichtet ist. In dieser Ausrichtung ist der erste Objektbereich 21, das heißt der Königszapfen, auf die linke Seite versetzt gegenüber den Stützwinden. Anhand dieser Relativposition des Königszapfens, das heißt, des ersten Objektbereichs 21, gegenüber den Stützwinden, das heißt gegenüber dem zweiten Objektbereich 22, kann erfasst werden, dass die Mittelachse Z2 des Anhängers 20 gegenüber der Mittelachse Z1 des Zugfahrzeugs 10 schräg gestellt ist, insbesondere ist es möglich, die Schrägstellung zu quantifizieren, das heißt einen Winkel anzugeben, mit dem die Mittelachse Z1 des Anhängers 20 gegenüber der Mittelachse Z1 des Zugfahrzeugs 10 geneigt ist.

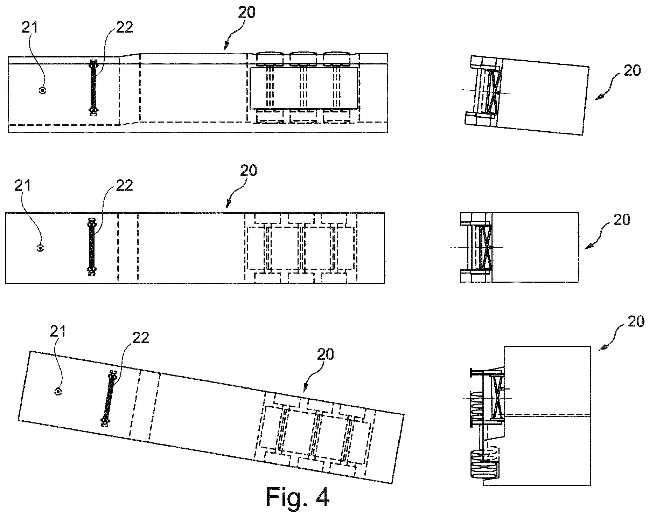

In den **Figuren 4a bis 4c** sind drei verschiedene Ausrichtungen eines Anhängers 20 in einer Bodenansicht und in einer entsprechenden Seitenansicht (rechts) dargestellt. In der Figur 4b handelt es sich abermals um eine fluchtende Ausrichtung der Mittelachse Z1 des Zugfahrzeugs 10 und der Mittelachse Z2 des Anhängers 20. In der Figur 4a ist eine in Fahrzeugrichtung gesehen linke Seite des Anhängers 20 erhöht gegenüber der in Querrichtung QR gegenüberliegenden rechten Seite. Eine solche Schrägstellung kann beispielsweise auftreten, wenn der Anhänger 20 mit seinen linken Rädern auf einer Erhöhung, wie einer Bordsteinkante, aufsitzt. Wie zu erkennen ist, zeigt die Draufsicht (rechts) in einer solchen Situation eine Schrägstellung gegenüber der üblicherweise im Wesentlichen vertikal verlaufenden Ausrichtung der Stützwinde, d. h. des zweiten Objektbereichs 22. Insofern lässt sich hier die Ausrichtung des zweiten Objektbereichs 22 gegenüber seiner üblichen Ausrichtung dazu heranziehen, festzustellen, ob eine entsprechende Drehung des Anhängers 20 um die Mittelachse Z2 des Anhängers 20 vorliegt. Dies muss gegebenenfalls ebenfalls beim Ankoppeln berücksichtigt werden. In Figur 4c ist eine entsprechende Schrägstellung, wie sie bereits im Zusammenhang mit Figur 3 diskutiert wurde, nochmal dargestellt.

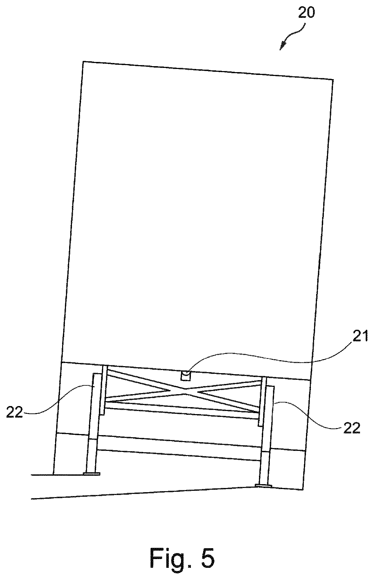

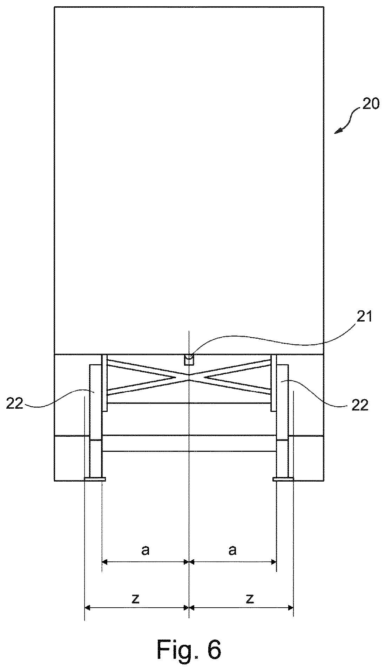

**Figur 5** zeigt die gekippte Stellung des Anhängers 20 noch einmal, wie sie in Figur 4a beschrieben ist. In **Figur 6** ist noch einmal die fluchtende Ausrichtung der Mittelachse Z1 des Zugfahrzeugs 10 und der Mittelachse Z2 des Anhängers 20 dargestellt. In dieser Darstellung, wie sie auch von der mindestens einen Erfassungseinrichtung 15 erfasst werden würde, ist ein Mittelpunkt des Verbindungskreuzes zwischen den beiden Stützwinden mittig angeordnet zwischen den beiden Stützwinden, genau wie die als erster Objektbereich 21 dienende Verbindungsvorrichtung in Form des Königszapfens. Außerdem liegen die Reifen bzw. Räder des Anhängers 20 außerhalb des Bereichs der zwischen den beiden in Querrichtung zueinander versetzten Stützwinden angeordnet ist bzw. liegt.

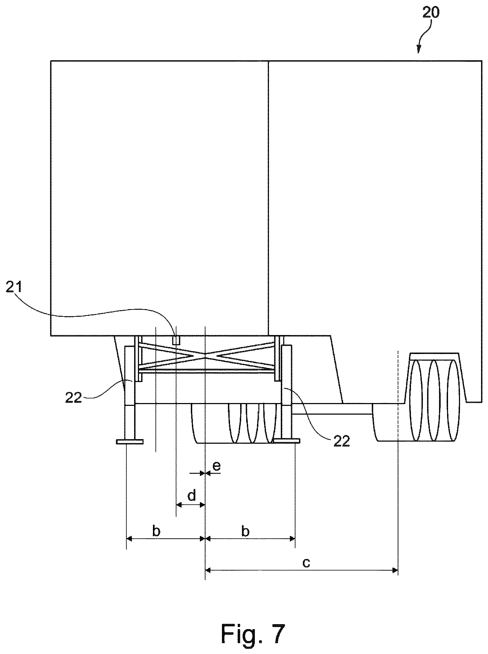

Im Gegensatz dazu zeigt die **Figur 7** eine Schrägstellung des Anhängers 20 und ein Beispiel für eine mittels der Erfassungseinrichtung aufgenommenen Aufnahme. In dieser Schrägstellung ist der als erster Objektbereich 21 dienende Königszapfen um eine Distanz d gegenüber der Mitte des Verbindungskreuzes zwischen den Stützwinden verschoben. Insbesondere ist der als erster Objektbereich 21 dienende Königszapfen zu einer der beiden Stützwinden hin versetzt angeordnet in der Projektionsdarstellung, die die mindestens eine Erfassungseinrichtung 15 aufnimmt. Anhand dieses Verschiebens lässt sich in vorteilhafterweise die Schrägstellung des Anhängers 20 festlegen bzw. in Erfahrung bringen. Neben den Referenzierung zwischen dem ersten Objektbereich 21 und dem zweiten Objektbereich 22 ist es in vorteilhafter Weise möglich, zusätzlich einen dritten Objektbereich, beispielsweise in Form der Räder bzw. in Form der Reifen für die Auswertung oder das Ermitteln der Ausrichtung des Anhängers 20 gegenüber dem Zugfahrzeug heranzuziehen. Vorliegend sind die Räder oder Reifen in der in Figur 7 dargestellten Ausrichtung, erfasst von der mindestens einen Erfassungseinrichtung 15, um einen Abstand c gegenüber der Mitte des Stabilisierungskreuzes zwischen den Stützwinden 22 versetzt.

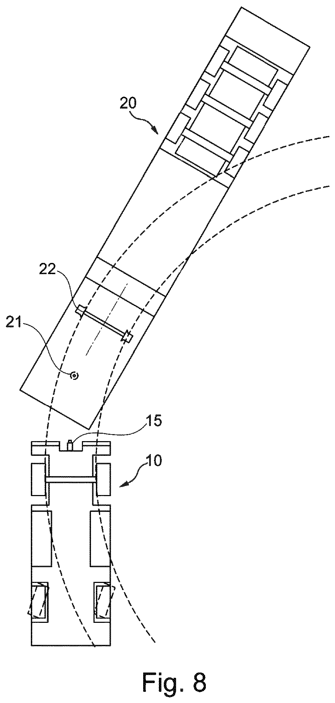

In **Figur 8** ist erneut das System aus Zugfahrzeug 10 und Anhänger 20 dargestellt, insbesondere in einem Zustand des Ankoppelns. Insbesondere ist hierbei der Bewegungskreis bzw. die Bewegung gegenüber dem Zugfahrzeug 10 dargestellt. Dabei wird diese Bewegung koordiniert anhand der ermittelten Ausrichtung, insbesondere aktuellen Ausrichtung, des Anhängers 20 gegenüber dem Zugfahrzeug 10. Dadurch lässt sich ein autonomes bzw. automatisiertes Ankuppeln des Anhängers 20 an das Zugfahrzeug 10 realisieren.

### Bezugszeichen:

- 10: Zugfahrzeug
- 11: Kupplungsplatte bzw. Sattelkupplung
- 15: Erfassungseinrichtung
- 20: Anhänger
- 21: erster Objektbereich (z. B. Königszapfen)
- 22: zweiter Objektbereich
- Z1: Mittelachse des Zugfahrzeugs
- Z2: Mittelachse des Anhängers
- QR: Querrichtung

## Patentansprüche

1. Verfahren zum Ermitteln einer Ausrichtung eines Anhängers (20) gegenüber einem Zugfahrzeug (10), insbesondere einer Ausrichtung eines Sattelanhängers gegenüber eines Sattelzugmaschine, wobei das Zugfahrzeug (10) mindestens eine Erfassungseinrichtung (15) aufweist, die einen ersten Objektbereich (21) am Anhänger (20) und einen zweiten Objektbereich (22) am Anhänger (20) erfasst, umfassend:
(a) Aufnahme des ersten Objektbereich (21) und des zweiten Objektbereichs (22) mittels der mindestens einen Erfassungseinrichtung (15);
(b) Bereitstellen der durch die mindestens eine Erfassungseinrichtung (15) erfassten Aufnahme einer Auswerteinrichtung;
(c) Zuordnen einer ersten Information zum ersten Objektbereich (21) und eine zweite Information zum zweiten Objektbereich (22) mittels der Auswerteeinrichtung und
(d) Bestimmen der Ausrichtung des Anhängers (20) gegenüber dem Zugfahrzeug (10) basierend auf der ersten Information und der zweiten Information mittels der Auswerteeinrichtung,
wobei die Auswerteinrichtung eine Gegenstanderkennung durchführt,
wobei die Gegenstandserkennung den ersten Objektbereich (21) und/oder den zweiten Objektbereich (22) einer Komponente des Anhängers über die aufgenommenen Konturen zuweist,
wobei es sich bei der Komponente um eine Stützwinde und/oder einen Stützwindenfuß und/oder ein Verstärkungskreuz und/oder eine Verbindungswelle handelt, **dadurch gekennzeichnet, dass**
die erste und / oder die zweite Information neben der relativen Position des ersten Objektbereichs gegenüber dem zweiten Objektbereich auch eine Größe und / oder eine Ausrichtung der Komponenten im ersten und / oder zweiten Objektbereich darstellen.

2. Verfahren gemäß Anspruch 1, wobei die mindestens eine Erfassungseinrichtung (15) ein optischer Sensor, insbesondere eine Kamera, ist, die vorzugsweise in Querrichtung des Zugfahrzeugs (10) mittig am Zugfahrzeug (10) angeordnet ist.

3. Verfahren gemäß einem der vorhergehenden Ansprüche, wobei der erste Objektbereich (21) in Längsrichtung des Anhängers (20) gesehen zum zweiten Objektbereich (22) versetzt ist.

4. Verfahren gemäß einem der vorhergehenden Ansprüche, wobei die erfasste Aufnahme eine Projektionsdarstellung des ersten Objektbereichs (21) und des zweiten Objektbereichs (22) entlang einer parallel zu einer Mittelachse (M1) des Zugfahrzeugs (10) verlaufenden Projektionsrichtung ist.

5. Verfahren gemäß einem der vorhergehenden Ansprüche, wobei eine einzige Erfassungseinrichtung (15) verwendet wird.

6. Verfahren gemäß einem der vorhergehenden Ansprüche, wobei zur Bestimmung der Ausrichtung des Anhängers (20) gegenüber dem Zugfahrzeug (10) die erste Information mit der zweiten Information verglichen wird.

7. Verfahren gemäß einem der vorhergehenden Ansprüche, wobei mittels mindestens einer weiteren Erfassungseinrichtung oder mittels der mindestens einen Erfassungseinrichtung zusätzlich ein Abstand zwischen
- der mindestens einen weiteren Erfassungseinrichtung oder der mindestens einen Erfassungseinrichtung und
- dem ersten Objektbereich (21) und/oder dem zweiten Objektbereich erfasst wird.

8. Verfahren gemäß einem der vorhergehenden Ansprüche, wobei die mindesten eine weitere Erfassungseinrichtung beabstandet zur mindestens einen Erfassungseinrichtung (15) angeordnet ist.

9. Verfahren gemäß einem der vorhergehenden Ansprüche, wobei die bestimmte Ausrichtung zum Steuern und/oder Führen des Zugfahrzeugs (10) und/oder des Anhängers (20) verwendet wird.

10. Verfahren gemäß einem der vorhergehenden Ansprüche, wobei vom ersten Objektbereich (21) zu einem ersten Zeitpunkt und einem zweiten Zeitpunkt jeweils eine Aufnahme von der Erfassungseinrichtung (15) gemacht wird, wobei dem ersten Objektbereich (21) zum ersten Zeitpunkt die erste Information und zum zweiten Zeitpunkt eine weitere erste Information zugeordnet wird, wobei anhand eines Vergleichs der ersten Information und der weiteren ersten Information eine zeitliche Änderung der Ausrichtung des Anhängers (20) zum Zugfahrzeug (10) bestimmt wird.

11. Verfahren gemäß einem der vorhergehenden Ansprüche, wobei das Verfahren in einem entkoppelten Zustand zwischen dem Zugfahrzeug (10) und dem Anhänger (20) durchgeführt wird.

12. Verfahren gemäß einem der vorhergehenden Ansprüche, ferner umfassend,
- Zuordnen eines ersten Satzes an Informationen zum ersten Objektbereich (21) und eines zweiten Satz an Informationen zum zweiten Objektbereich (22) mittels der Auswerteeinrichtung,
- Bestimmen der Ausrichtung des Anhängers gegenüber dem Zugfahrzeug basierend auf dem ersten Satz an Informationen und/oder dem zweiten Satz an Informationen.

13. Verfahren gemäß einem der vorhergehenden Ansprüche, wobei der erste Objektbereich (21) und/oder der zweite Objektbereich (22) eine Komponente des Anhängers (20) umfasst.

14. System zum Durchführen eines Verfahrens gemäß einem der vorhergehenden Ansprüche, umfassend:
- mindestens eine Erfassungseinrichtung (15) zur Aufnahme des ersten Objektbereich (21) und des zweiten Objektbereichs (22) und
- mindestens eine Auswerteinrichtung zum Zuordnen einer ersten Information zum ersten Objektbereich (21) und eine zweite Information zum zweiten Objektbereich (22) und zum Bestimmen der Ausrichtung des Anhängers (20) gegenüber dem Zugfahrzeug (10) basierend auf der ersten Information und der zweiten Information.

## Claims

1. Method for determining the orientation of a trailer (20) relative to a towing vehicle (10), in particular an orientation of a semi-trailer relative to a semi-trailer tractor, wherein the towing vehicle (10) has at least one detection device (15) which detects a first object area (21) on the trailer (20) and a second object area (22) on the trailer (20), comprising:
(a) recording the first object area (21) and the second object area (22) by means of the at least one detection device (15);
(b) providing the image captured by the at least one detection device (15) to an evaluation device;
(c) assigning a first piece of information to the first object area (21) and a second piece of information to the second object area (22) by means of the evaluation device; and
(d) determining the orientation of the trailer (20) relative to the towing vehicle (10) based on the first piece of information and the second piece of information by means of the evaluation device,
wherein the evaluation device performs object recognition,
wherein the object recognition assigns the first object area (21) and/or the second object area (22) to a component of the trailer via the recorded contours,
wherein the component is a support jack and/or a support jack foot and/or a reinforcement cross and/or a connecting shaft,
**characterized in that** the first and/or second piece of information also represent/s a size and/or an orientation of the components in the first and/or second object area in addition to the relative position of the first object area with respect to the second object area.

2. Method according to claim 1, wherein the at least one detection device (15) is an optical sensor, in particular a camera, which is preferably arranged centrally on the towing vehicle (10) in the transverse direction of the towing vehicle (10).

3. Method according to any one of the preceding claims, wherein the first object area (21) is offset from the second object area (22) when viewed in the longitudinal direction of the trailer (20).

4. Method according to any one of the preceding claims, wherein the detected image is a projection representation of the first object area (21) and the second object area (22) along a projection direction running parallel to a central axis (M1) of the towing vehicle (10).

5. Method according to any one of the preceding claims, wherein a single detection device (15) is used.

6. Method according to any one of the preceding claims, wherein the first piece of information is compared with the second piece of information to determine the orientation of the trailer (20) relative to the towing vehicle (10).

7. Method according to any one of the preceding claims, wherein, by means of at least one further detection device or by means of the at least one detection device, a distance between
- the at least one additional detection device or the at least one detection device and
- the first object area (21) and/or the second object area is additionally detected.

8. Method according to any one of the preceding claims, wherein the at least one further detection device is arranged at a distance from the at least one detection device (15).

9. Method according to any one of the preceding claims, wherein the determined orientation is used to control and/or guide the towing vehicle (10) and/or the trailer (20).

10. Method according to any one of the preceding claims, wherein an image is taken by the detection device (15) of the first object area (21) at a first point in time and at a second point in time, wherein the first piece of information is assigned to the first object area (21) at the first point in time and further first piece of information is assigned to it at the second point in time, wherein a temporal change in the orientation of the trailer (20) relative to the towing vehicle (10) is determined on the basis of a comparison of the first piece of information and the further first piece of information.

11. Method according to any one of the preceding claims, wherein the method is performed in a decoupled state between the towing vehicle (10) and the trailer (20).

12. Method according to any one of the preceding claims, further comprising
- assigning a first set of information to the first object area (21) and a second set of information to the second object area (22) by means of the evaluation device,
- determining the orientation of the trailer relative to the towing vehicle based on the first set of information and/or the second set of information.

13. Method according to any one of the preceding claims, wherein the first object area (21) and/or the second object area (22) comprises a component of the trailer (20).

14. System for performing a method according to any one of the preceding claims, comprising:
- at least one detection device (15) for recording the first object area (21) and the second object area (22), and
- at least one evaluation device for assigning a first piece of information to the first object area (21) and a second piece of information to the second object area (22) and for determining the orientation of the trailer (20) relative to the towing vehicle (10) based on the first piece of information and the second piece of information.

## Revendications

1. Procédé de détermination de l'orientation d'une remorque (20) par rapport à un véhicule tracteur (10), en particulier de l'orientation d'une semiremorque par rapport à un tracteur routier, le véhicule tracteur (10) comportant au moins un dispositif de détection (15) qui détecte une première zone d'objet (21) au niveau de la remorque (20) et une deuxième zone d'objet (22) au niveau de la remorque (20), consistant à :
(a) faire une prise de vue de la première zone d'objet (21) et de la deuxième zone d'objet (22) à l'aide dudit au moins un dispositif de détection (15) ;
(b) fournir la prise de vue faite par ledit au moins un dispositif de détection (15) à un dispositif d'évaluation ;
(c) attribuer une première information à la première zone d'objet (21) et une deuxième information à la deuxième zone d'objet (22) à l'aide du dispositif d'évaluation ; et
(d) déterminer l'orientation de la remorque (20) par rapport au véhicule tracteur (10) à l'aide du dispositif d'évaluation sur la base de la première information et de la deuxième information,
dans lequel
le dispositif d'évaluation effectue une reconnaissance d'objet,
la reconnaissance d'objet permet d'attribuer la première zone d'objet (21) et/ou la deuxième zone d'objet (22) à un composant de la remorque par le biais des contours enregistrés,
le composant est une béquille de support et/ou un pied de béquille de support et/ou un renfort en croix et/ou un arbre de liaison,
**caractérisé en ce que**
la première et/ou la deuxième information indique(nt), outre la position relative de la première zone d'objet par rapport à la deuxième zone d'objet, également une taille et/ou une orientation des composants dans la première et/ou la deuxième zone d'objet.

2. Procédé selon la revendication 1,
dans lequel ledit au moins un dispositif de détection (15) est un capteur optique, en particulier une caméra, qui est disposé(e) de préférence au centre du véhicule tracteur (10) dans la direction transversale du véhicule tracteur (10).

3. Procédé selon l'une des revendications précédentes,
dans lequel la première zone d'objet (21) est décalée par rapport à la deuxième zone d'objet (22), vue dans la direction longitudinale de la remorque (20).

4. Procédé selon l'une des revendications précédentes,
dans lequel la prise de vue enregistrée est une représentation en projection de la première zone d'objet (21) et de la deuxième zone d'objet (22) le long d'une direction de projection parallèle à un axe central (M1) du véhicule tracteur (10).

5. Procédé selon l'une des revendications précédentes,
dans lequel un seul dispositif de détection (15) est utilisé.

6. Procédé selon l'une des revendications précédentes,
dans lequel, pour déterminer l'orientation de la remorque (20) par rapport au véhicule tracteur (10), la première information est comparée à la deuxième information.

7. Procédé selon l'une des revendications précédentes,
dans lequel au moins un autre dispositif de détection ou ledit au moins un dispositif de détection permet en outre de détecter une distance entre
- ledit au moins un autre dispositif de détection ou ledit au moins un dispositif de détection et
- la première zone d'objet (21) et/ou la deuxième zone d'objet.

8. Procédé selon l'une des revendications précédentes,
dans lequel ledit au moins un autre dispositif de détection est disposé à distance dudit au moins un dispositif de détection (15).

9. Procédé selon l'une des revendications précédentes,
dans lequel l'orientation déterminée est utilisée pour commander et/ou guider le véhicule tracteur (10) et/ou la remorque (20).

10. Procédé selon l'une des revendications précédentes,
dans lequel une prise de vue respective de la première zone d'objet (21) est faite par le dispositif de détection (15) à un premier moment et à un deuxième moment,
la première information est attribuée à la première zone d'objet (21) au premier moment et une autre première information lui est attribuée au deuxième moment,
une variation dans le temps de l'orientation de la remorque (20) par rapport au véhicule tracteur (10) est déterminée sur la base d'une comparaison de la première information à l'autre première information.

11. Procédé selon l'une des revendications précédentes,
dans lequel le procédé est mis en oeuvre dans un état découplé entre le véhicule tracteur (10) et la remorque (20).

12. Procédé selon l'une des revendications précédentes,
consistant en outre à :
- attribuer un premier ensemble d'informations à la première zone d'objet (21) et attribuer un deuxième ensemble d'informations à la deuxième zone d'objet (22) au moyen du dispositif d'évaluation,
- déterminer l'orientation de la remorque par rapport au véhicule tracteur sur la base du premier ensemble d'informations et/ou du deuxième ensemble d'informations.

13. Procédé selon l'une des revendications précédentes,
dans lequel la première zone d'objet (21) et/ou la deuxième zone d'objet (22) comprend un composant de la remorque (20).

14. Système pour mettre en œuvre un procédé selon l'une des revendications précédentes, comprenant :
- au moins un dispositif de détection (15) pour faire une prise de vue de la première zone d'objet (21) et de la deuxième zone d'objet (22), et
- au moins un dispositif d'évaluation pour attribuer une première information à la première zone d'objet (21) et une deuxième information à la deuxième zone d'objet (22) et pour déterminer l'orientation de la remorque (20) par rapport au véhicule tracteur (10) sur la base de la première information et de la deuxième information.
